# EUROPEAN PATENT APPLICATION

(11) **EP 0 561 731 A1**
(43) Date of publication of application: **22.09.1993**
(21) Application number: 93610020.5
(22) Date of filing: 16.03.1993
(51) Int. Cl.: B07B 1/24, B07B 4/06

(54) **Plant, in particular for sorting household waste**

(30) Priority: 16.03.1992 DK 353/92
(71) Applicant: TIM MASKINFABRIK A/S, DK-6980 Tim (DK)
(72) Inventor: Pedersen, Osvald, DK-6980 Tim (DK)
(74) Representative: Pedersen, Soeren Skovgaard

(57) **Abstract**

A plant, in particular for grading household refuse and separation of plastic sacks and bags or the like, comprises a horizontal, rotating, cylindrical screen (12), an arrangement (26) for slitting the plastic sacks and bags, a feeding arrangement (22,24) for feeding the slit sacks/bags into the screen at one end, a blower arrangement (34,36) for blowing an axial current of air through the screen from the feeding end at a level below the feeding of the material for engaging and carrying along the slit sacks/bags, and a collecting arrangement (42,44) at the end of the discharge end of the screen for collecting the material blown from the screen, such as slit sacks and bags.

## Description

The invention concerns a plant, in particular for grading household waste comprising a horizontal rotatable cylindrical screen, a feeding device and optionally a slitting device, in case the waste is supplied in plastic bags and/or sacks, for feeding the waste into the screen at its input end, a blower arrangement for providing an axial current of air thorugh the cylindrical screen for tearing loose plastic foil, plastic bags, plastic sacks, and the like, and a collecting device disposed at the end of the cylindrical screen for collecting the material torn loose by the current of air.

The removal of household waste is typically performed by collecting it in plastic bags which when filled are put into plastic sacks which are carried by stands. The plastic sacks are collected by refuse lorries and taken to be destroyed at incineration plants. Recognizing that this may not be an appropriate way to dispose of household refuse, there is a movement towards grading the refuse into a compostable part which may be biologically degraded and a combustible part which may be incinerated in an incinerating plant. During handling of the refuse the plastic sacks or bags constitute a major problem, because they have to be emptied and separated. In case refuse is graded at the source, i.e. at the individual households, the plastic sacks or bags have to be separated from the biodegradable refuse in any case. Even if this were to be performed manually it is a monotonous and hard work, but even more serious is that it may be hazardous to the health, and hence mechanical grading is to be preferred whereby direct contact with the garbage is avoided.

By means of the invention there is provided a plant for automatically grading of in particular household refuse and separation of plastic foil and similar material while the the plant may be fitted with facilities for emptying of plastic sacks and bags. The plant according to the invention is particular in that the blower arrangement is designed to inject the air at a level below the feeding of the material in that the air injection preferably takes place at the lower part of the cross section of the cylindrical screen while the feeding device preferably feeds in the material at the upper part of the screen cross section, and in that at least the inside of the screen is made of a non-antistatic material. In the screen the light material such as plastic foil, empty plastic bags and sacks will be carried off by the current of air along with other plastic and paper remains and is collected after the screen, where it may be conducted to a combustible fraction. The biodegradable material will graded through the cylindrical screen and may be conducted to the compostable fraction. Any larger pieces which are retained by the screen are pass through the outlet and are taken to more detailed sorting. The plant may be provided as a stationary or a mobile plant.

The plant may be used for extracting plastic from refuse which has already been composted, i.e. refuse which has been composted as a whole, containing e.g. empty plastic sacks or bags, but equally for fresh waste in plastic sacks or bags where the waste is emptied out of them, e.g. by slitting the sacks or bags. It is immaterial how the actual slitting is performed, as long as it is sufficient to separate them from the content during the subsequent treatment. The slitting may occur longitudinally or transversely, on one side only or on both sides, alternatively as a proper cutting-through of the the sack. The width of the strips into which the sacks or bags are cut is equally immaterial as long as the pieces are sufficiently large to allow them to be carried along in the current of air. A suitable slitting arrangement comprises a number of rotating knives above a conveyor in order that the plastic sacks and bags are slit during passage under them. The knives may be radially disposed blades, but in order to reduce the the risk that the sacks or bags twine around the blades, knives in the form of thin, circular blades are preferred. A particularly suitable construction is found in thin circular plates carrying triangular knives at the periphery of the type used in lawn mowers. Generally the knives provide a coarse cutting of the material.

When the plastic sacks or bags are fed into the screen they will because of the rotation travel along with the screen for a while and then fall down again. If it has not occured before, this turning in the screen will loosen the bags from the waste so that sooner or later they are carried along by the current of air. It is an advantage to feed the plastic sacks or bags at the top of the feeding chute of the screen in order that they fall an appreciable distance before hitting the screen. In case the sacks or bags are not separated during the fall itself, the hitting of the inside of the screen will contribute to separation. At the input end the inside of the screen may be fitted with deflectors which are shaped to lift the material and make it proceed through the screen. In order to take care of sacks and bags which have still not been carried off by the current of air, the screen may be supplied on its inside by knives projecting inwardly, e.g. triangular knives as decribed above, for further cutting of *recalcitrant sacks or bags. The knives will lift these further up along the side of the screen and facilitate their further dislocation.

The air may be blown through the screen in several ways, e.g. via several injectors at the input end of the screen, and optionally through several injectors distributed along the lenght of the screen. However it has been determined that a particularly good effect is obtained by arranging one or several propellers in the input end of the screen under the feeding chute for the material. Hereby a massive current of air is directed against the falling material. By this massive direct influence it turns out that the greater part of all sacks or plastic bags are carried along . In order to obtain an optimal effect, i.e. carrying along the maximum amount of plastic bags and similar material without pulling along compostable material, the velocity of air or the amount of air may be controlled, preferably by controlling the rotation of the propeller or ventilator. Ventilators may be regulated by means of shutters.

The air current will dissolve fairly quickly after leaving the screen, but even so it is necessary to make special provisions to prevent the material it has carried along from spreading over a large area. The collecting unit may be a wire cage, a container or any other kind of windbreak. A particular construction is particular in that the screen at its output end is supplied with a conveyor which reaches backwards and which is covered by a funnel-shaped net which is fitted to the sides of the conveyor frame and to a fixed frame surrounding the output end of the screen. The net will retain the airborne material such as ripped plastic sacks or bags, and it eventually falls to rest on the conveyer which carries it to e.g. a pile or a container. In this way the airborne material is completely controlled. If a particularly long conveyor is desired it may be articulated, in order that it may be swung up towards the output opening of the screen and over the top. The collecting net is no bar to this, because it folds up.

The material that passes the screen openings may be conducted along in different ways, e.g. on belt conveyors, screw conveyors or be removed with shovel implements. A perticular construction of a mobile plant comprises a longitudinal conveyor disposed below the screen for collecting the fines, and at the end thereof there is a crosswise arranged conveyor for removing the material. A particular construction has a removably mounted side elevator which from a transport position on the same side as the other elevator may be moved to the opposite side in order that the separated material may be delivered in three completely separete piles. In a mobile plant this is provided with automatic forward movement so that three parallel longitudinal stacks are created.

The plant is also able to separate the fractions with a grading by using separate mesh widths in the screen. A special construction of the screen ends with an arrangement of rearwards pointing fingers, e.g. in the form of smooth steel rods with a greater distance between them than the mesh width. The rods are fixed at the periphery of the drum surrounding the screen and may be disposed in an axial direction, however it has turned out to be particularly advantageous to fit these as a frustrate cone narrowing towards the rear, whereby the passage between the is increased due to the stemming of the material. By disposing the rods at an angle with respect to the direction of rotation of the screen the fingers are made self-cleaning because material that may have been caught will slide off.

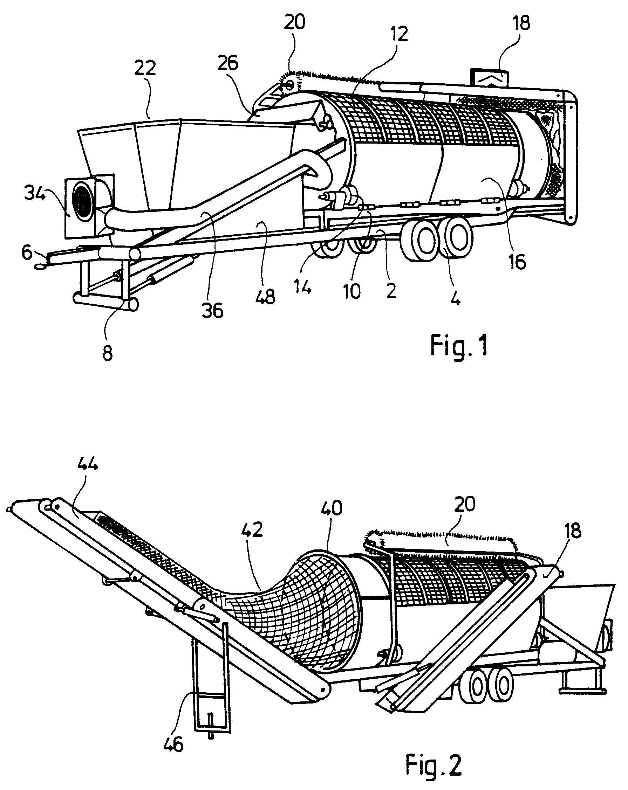

An embodiment of the invention will be described in greater detail in the following with reference to the accompanying drawing, in which
Fig. 1. shows a mobile plant in transport mode shown frontally,
Fig. 2. shows the mobile plant in its operational mode seen from the opposite side, in perspective from the rear,

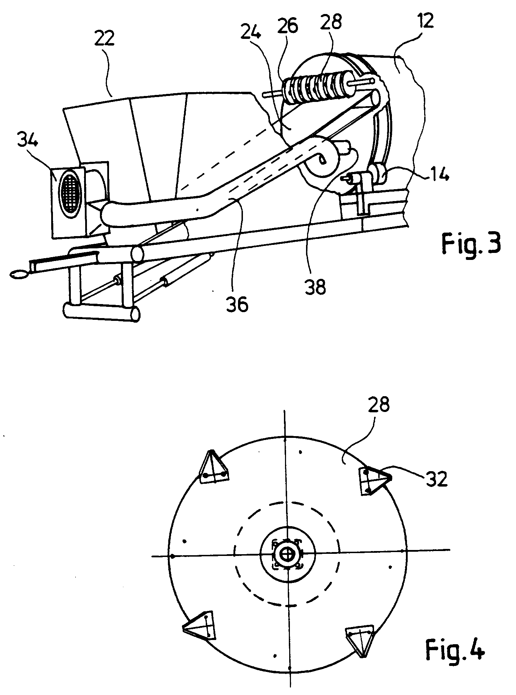

Fig. 3. shows a section of the input end of the plant where certain parts have been left out and cut away to illustrate the slitting and feeding arrangements,
Fig. 4. shows a slitting knife directly from the side,
Fig. 5 shows another embodiment of the plant according to the invention, directly from the side and shown without the slitting arrangement,
Fig. 6 shows a plant generally as in Fig. 5, but seen from above and with elevators in place, however with the opposite disposition to that in Fig. 5,
Fig. 7 shows a section of the screen along the line VII-VII in Fig. 5, and
Fig. 8 shows the screen as seen from behind.

The mobile plant comprises a body frame supplied with wheels 4. In front the body frame has a haulage hook 6 which is used when the plant is pulled behind a tractor or similar vehicle. The front end of the plant may be supported on the ground by means of a support leg 8 which may be swung down in place. In the drawing the suport leg is shown in its swung down position. The swinging up and down is performed by means of a hydraulic cylinder which is not shown. On the body frame a cylindrical screen 12 is supported via an intermediate frame. The screen rests at each end on a couple of hydraulically driven rollers 14 which rotate the screen around its longitudinal axis, in that the rollers drive circumferential rails on the screen. In order to control the speed of material in the screen its inclination may be adjusted by raising and lowering the intermediate frame by means of a not shown hydraulic cylinder. In order that the material does not fall through the screen and onto the ground the lower part is screened off by side walls 16 which conduct the material which passes through the screen onto a conveyor which runs below the screen for the entire lenght of the screen in order to collect the material that passes through the screen. This longitudinal conveyor - which is not visible on the drawing - delivers the material to a crosswise disposed conveyopr 18 by means of which the material may be carried to the side, either as a long pile as the plant is moved forward or upwards to carriages or containers. During transport the conveyor 18 may be swung into a vertical position on the side of the plant.

In order to keep the screen clean a driven brush 20 which is held by a couple of swinging arms is disposed above the screen. Waste which is brushed off falls back into the screen.

At the front end of the plant there is a feed container 22, the bottom of which is a rearward directed and upwards inclined conveyor 24 which ends inside the screen at its front end. In order to slit plastic sacks and bags which are loaded into the container 22 there is disposed at the top end of the conveyor 24 a slitting arrangement 26. This arrangement comprises a number of thin circular steel discs 28 on a common shaft which is driven by a hydraulic motor which is not shown. At the circumference of the discs four knives 32 are placed of the same type as that used in lawn mowers. When the knives have been worn on one side they may be turned over by loosening the fastening bolts. The knives have been shown to be remarkably efficient in slitting the platic sacks and plastic bags as they pass under the knife arrangement while resting on the conveyor. The knife arrangement is placed slightly before the discharge end of the conveyor which has been shown to be suitable in order to obtain a good slitting and delivery of the sacks or bags. On the other hand it is suitable that the slitting does not occur until just before the sacks or bags are introduced into the screen as the refuse is held together until the actual grading takes place. On the inside of the screen at the front end deflectors are disposed which ensure that the material is led further into the screen and also "shovel" it up an appreciable bit along the side of the screen. Further into the screen knives of the same type as on the slitting arrangement are scattered in order to perform further slitting of plastic sacks or bags which may still not be emptied and freed.

For removing the plastic sacks or bags a ventilator 34 with a conduit 36 is mounted on the front of the plant which feeds into the lower input end of the screen at 38 in its vertical line of symmetry below the conveyor 24 and arranged so that it throws a current of air along the length of the screen for carrying along the slit plastic sacks or bags which have fallen from the conveyor 24 and those which have been separated during the passage through the screen. Even if the screen is open, the current of air along its lenght is fairly well defined as if it occured in a closed profile. Around the rear end of the screen which actually has closed side walls there is disposed a stationary cicular steel bracket to which is fixed a net 42 which is furthermore fixed to the sides of a conveyor 44 which runs towards the rear and is inclined upwards. The slit plastic sacks or bags which are carried by the current of air are restrained by the net and come quickly to rest on the conveyor 44 because the current of air is quickly dissipated after being ejected from the rear end of the screen. By means of the conveyor the slit plastic sacks or bags and other airborne material may be collected in a container. For transportation purposes the conveyor 44 is split in two so that it may be swung up from the rear end of the screen and above it. During the folding into the transportation position the net will simply fold up. In order to support the conveyor 44 in its operating mode it may be supported by a support frame 46.

The plant is run by its own internal combustion engine placed in the engine compartment 48 below the feed container 22 together with the other vital machine parts.

In order to prevent dirt in the ventilator 34 during the filling of the container 22 this may be screened off at the top by a projecting screen like a roof.

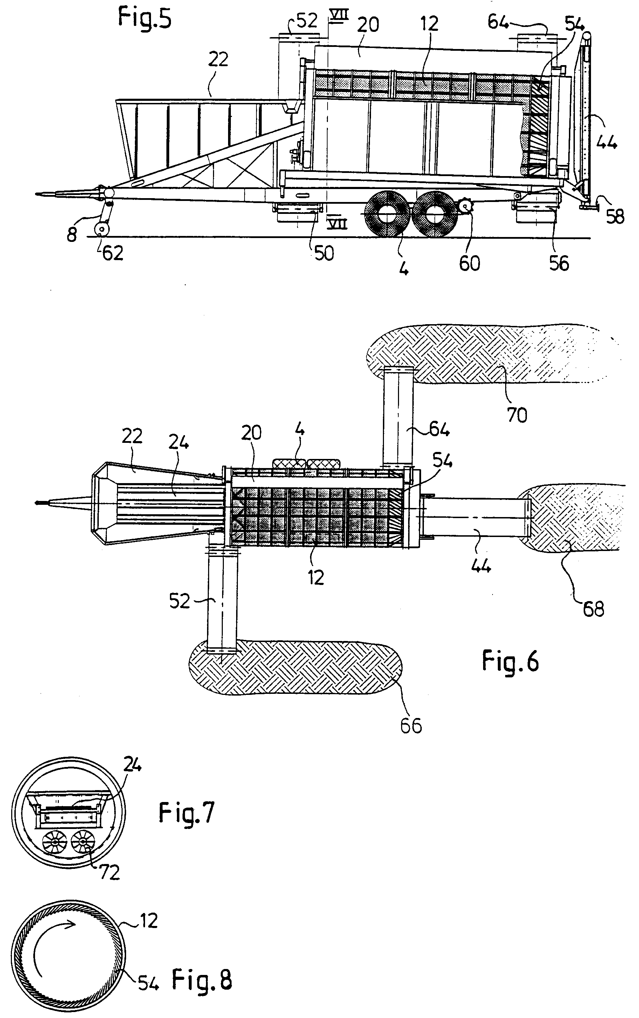

In Figs. 5 - 8 on the drawing there is shown another embodiment of the plant according to the invention, whereby the waste may be separated into three fractions, one of which is plastic waste while the other two are graded fractions. The same reference numbers as above have been used for identical parts.

In contrast with the embodiment described above, the conveyor belt which is placed below the screen carries the fines forward to the front end of the plant where it is delivered onto a crosswise disposed conveyor 50 which takes it further onto a side elevator 52 which is a downwards inclinable belt conveyor.

The rear end of the screen has a particular construction with fingers which project freely backwards and which are disposed in a particular pattern as shown in the drawing. Geometrically the fingers approximate the shape of a truncated cone in which the fingers are inclined side lines. The fingers narrow the cross section and placed at an angle in the direction of the screen. The material which is conveyed stringlike to the rear on the bottom of the screen falls through the fingers onto a crosswise disposed conveyor 56 below in that the distance between the fingers is much larger than the mesh size in the cylindrical screen. The stream of material is stemmed by the fingers which project upwards at an angle from the bottom of the screen which promotes the ability to sift through the fingers. The special orientation of the fingers prevents the material which is carried along with the current of air from attaching itself to them but lets it glide off. The prongs are pulled along in the direction of rotation of the screen, so that figuratively speaking they are pulled out of any material caught by them.

In same way as in the previously described embodiment the material which is carried by the current of air is caught on a rearward unfoldable elevator 44 which is covered by a net which is not shown here. In the present case the elevator consists of one stretch only which is sufficient in lenght to collect the material and to provide a required unloading height. It should be noticed that the reference 58 refers to a crosswise disposed beam for rear lights.

In order to move the plant forwards during operation it is supplied with propelling means which comprise a driven roller 60 which is hinged crosswise in the body frame behind the rearmost set of driving wheels and which may be swung into contact with these. The support leg 8 which may be swung down is supplied with a toe wheel 62. By using automatic driving control the plant may move forwards a pre-determined amount at a time, determined by the width of the side elevators, e.g. 1 metre. The propelling means is preferably remotely controlled by a radio transmitter from a loader which is used for loading material into the feed container of the plant. The plant is supplied with a receiver and an aerial which is connected to the automatic driving control. The conductor of the loader may single-handed control the plant and coordinate the machines. With an elevator on either side and one pointing rearwards three graded fractions are deposited in three separate piles 66, 68, 70.

The plant shown is disposed such that the rearmost elevator 64 may be removed and be placed on the same side as the foremost elevator 52 during transportation. The screen may thus have an extra large width with a larger capacity resulting therefrom. During operation the elevator 64 is lifted off and moved to the opposite side as shown in Fig. 6.

For creating the current of air along the lenght of the screen there are used two driven propellers 72 disposed side by side at the front end and near the bottom of the screen, cf. Fig. 7. This is more compact the use of a ventilator. The capacity is in the order of 30,000 cubic metres per hour whereas the hourly air volume for the embodiment described above is in the order of 18,000 cubic metres.

The embodiment is particularly advantageous in that it may grade the refuse into three fractions and may deliver these in three parallel piles which is made possible by the particular end of the screen using a finger arrangement and the forward movement. The sorting or grading is so good that the first fraction of fines passing through the screen contains less than 1% plastic material, and the second fraction which is the fraction passing through the finger section has less than 30% plastic. This fraction may obviously be cycled through plant once more.

The embodiment shown may be pulled by a lorry and may be transported with the same speed as an ordinary trailer, i.e. at 70-80 km/h.

Even if the invention has been described particularly for use with separation of plastic sacks or bags in connection with household refuse, it is obvious that the plant may be used for other purposes where it is desired to separate and remove plastic foil, papers and similar material which may be easily carried along by a current of air. The two embodiments shown are both mobile plants, but according to the invention the plant may be stationary with the resulting changes in the discharge of the material.

## Claims

1. A plant, in particular for grading household waste comprising a horizontal rotatable cylindrical screen (12), a feeding device and optionally a slitting device (24, 26), in case the waste is supplied in plastic bags and/or sacks, for feeding the waste into the screen at its input end, a blower arrangement (34, 72) for providing an axial current of air thorugh the cylindrical screen for tearing loose plastic foil, plastic bags, plastic sacks, and the like, and a collecting device (42, 44) disposed at the end of the cylindrical screen for collecting the material torn loose by the current of air, **characteristic in** that the blower arrangement is designed to inject the air at a level below the feeding of the material in that the air injection preferably takes place at the lower part of the cross section of the cylindrical screen while the feeding device preferably feeds in the material at the upper part of the screen cross section, and in that at least the inside of the screen is made of a non-antistatic material.

2. A plant according to claim 1, **characteristic in** that the blower arrangement consists of one or more driven propellers (72), preferably two disposed side by side at the bottom of the cross section of the screen.

3. A plant according to claim 1, **characteristic in** that the screen is supplied with freely projecting fingers (54) at its rear end, which predominantly form a truncated cone which narrows towards the rear.

4. A plant according to claim 1 or 2, **characteristic in** that the fingers are disposed at an angle with respect to the direction of rotation of the screen.

5. A plant according to any of the claims 1-4, **characteristic in** that the collecting arrangement (42, 44) comprises an elevator (44) which reaches backwards and which is covered by a funnel-shaped net (42) which is fitted to the sides of the conveyor frame and to a fixed frame surrounding the output end of the screen.

6. A plant according to any of the claims 1-5, and comprising a lengthwise disposed conveyor below the screen for collecting the fines passing through the screen, and a side elevators in the form of belt conveyors for removing the material to the side, **characteristic in** that the lengthwise disposed conveyor goes from the rear end of the screen cylinder and forwards and discharges the material onto a side elevator (52) at the front end, and that in connection with the finger section (54) there is arranged a second side elevator (64) which may take the material which has passed between the fingers to the opposite side.

7. A plant according to claim 6, **characteristic in** that the rearmost side elevator (64) is removably mounted and may be moved to the same side as the forward elevator (52) during transportation.

8. A plant according to any of the claims 1-7, **characteristic in** that it is disposed as a transportable plant with driving wheels and own driving engine as well as being supplied with propelling means for moving the plant forward during operation in order to deliver the graded material in longitudinally extending piles.

9. A plant according to claim 8, **characteristic in** that the propelling means comprise a preferably remotely controlled driven roller (60) which is hinged directly behind the rearmost set of driving wheels in such a way that it may be brought to bear against these, and that the support leg is supplied with a toe wheel (62).

10. A plant according to any of the claims 1-9, **characteristic in** that the slitting arrangement comprises a set of circular rotating knives (28, 32) mounted on a common drive shaft above a conveyor belt (24) for feeding plastic sacks and/or in order that these are slit during passage under the knives.
